(19) Europäisches Patentamt / European Patent Office / Office européen des brevets

(11) **EP 2 460 863 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
***C09J 133/00*** (2006.01)

(21) Anmeldenummer: **11187741.1**

(22) Anmeldetag: **03.12.2009**

(54) **Selbstklebriges Basispolymer für Elektrolumineszenzmassen**

Self-adhesive base polymer for electro-luminescent masses

Polymère de base autocollant pour masses électroluminescentes

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.12.2008 DE 102008062129**

(43) Veröffentlichungstag der Anmeldung:
**06.06.2012 Patentblatt 2012/23**

(62) Dokumentnummer(n) der früheren Anmeldung(en) nach Art. 76 EPÜ:
**09764822.4 / 2 285 928**

(73) Patentinhaber: **tesa SE**
**20253 Hamburg (DE)**

(72) Erfinder:
• **Klier, Daniel Dr.**
**21465 Reinbek (DE)**
• **Guse, Berit**
**22455 Hamburg (DE)**

(56) Entgegenhaltungen:
**EP-A2- 0 399 680**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung liegt auf dem Gebiet der Polymertechnik und betrifft ein selbstklebriges Polymer zur Verwendung in elektronischen Vorrichtungen, eine Selbstklebemasse mit diesem Polymer, eine Elektrolumineszenzmasse mit dieser Selbstklebemasse, selbstklebrige Flächenelemente mit einer derartigen Klebemasse oder Elektrolumineszenzmasse sowie eine Elektrolumineszenzvorrichtung mit dieser Elektrolumineszenzmasse. Ferner betrifft die Erfindung die Verwendung der Selbstklebemasse bei der Verklebung von Komponenten eines elektronischen Geräts sowie die Verwendung der Elektrolumineszenzmasse beim Verkleben von Komponenten optischer Anzeigevorrichtungen und/oder Beleuchtungsvorrichtungen.

Selbstklebemassen werden in vielen technischen Bereichen als Verarbeitungshilfsmittel eingesetzt, mittels derer es möglich ist, auf einfache Weise unterschiedliche Komponenten eines Systems miteinander zu verbinden. Der Begriff Selbstklebemasse umfasst Haftklebemassen und Heißschmelzklebemassen, also alle Klebemassen, die von sich aus eine Verklebung mit dem jeweiligen Haftgrund (dem Untergrund, Verklebungssubstrat oder Klebegrund) ermöglichen. Diese Selbstklebemassen können auf unterschiedliche Weise verwendet werden. Aus Gründen der einfachen Handhabbarkeit kommen Selbstklebemassen typischerweise in Form von Selbstklebemasseschichtungen zum Einsatz, die Teil eines selbstklebenden Flächenelements sind, beispielsweise als Selbstklebeband in Rollenform oder als dünner, extrudierter Selbstklebefilm, der ohne Verwendung von Lösungsmitteln erhalten werden kann. Selbstklebemasseschichtungen lassen sich ferner auch bei einer Auftragung der Selbstklebemasse als flüssige Lösung oder Dispersion in einem Beschichtungsschritt oder einem Druckvorgang herstellen.

Insbesondere für den Einsatz in elektronischen Geräten werden an Selbstklebemassen sehr hohe Anforderungen gestellt. Neben einem geringen Ausgasungsverhalten sollten die Selbstklebemassen in einem weiten Temperaturbereich einsetzbar sein und bestimmte optische und elektrische Eigenschaften aufweisen. Aufgrund der zunehmenden Miniaturisierung der Elektronik ist es bei Klebemasseschichtungen ein grundsätzliches Ziel, innerhalb der Klebemasseschicht zusätzlich zur Verklebbarkeit weitere Funktionen zu realisieren, um dadurch Prozessschritte bei der Fertigung der Geräte einsparen zu können. Ferner kann dadurch auf zusätzliche Funktionselemente verzichtet werden, so dass die Größe und das Gewicht des entsprechenden Bauelements reduziert wird.

Hoch funktionalisierte Selbstklebemassen und Selbstklebebänder werden in verschiedenen elektronischen und elektrischen Bauteilen eingesetzt. So ermöglichen sie in starren oder flexiblen miniaturisierten elektronischen Schaltungen eine signaltechnische Kopplung oder Entkopplung von Bauteilen und Bauteilkomponenten, wobei die Selbstklebemassen infolge ihrer hohen Flexibilität selbst unter mechanischer Verformung eine hohe Langzeitstabilität aufweisen und dabei einfach zu verarbeiten sind, weshalb sie sogar auf unregelmäßig geformten Oberflächen eingesetzt werden können.

Insbesondere werden Selbstklebemassen und Selbstklebebänder zur Verklebung von Anzeigesystemen verwendet, beispielsweise bei Flüssigkristallanzeigen (LCDs) mit zusätzlichen Funktionsschichten, oder bei berührungssensitiven Anzeigen (Touchpanels) in Mobiltelefonen, Computerbildschirmen, Fernsehgeräten und Kleincomputern wie Notebooks, Laptops oder persönlichen digitalen Assistenten (PDAs).

In den vergangenen Jahren haben aufgrund des signifikant niedrigeren Energieverbrauchs für diese Anzeigegeräte Lichtquellen auf der Basis von Lumineszenzstrahlern an Bedeutung gewonnen. Anders als bei Wärmestrahlern wie beispielsweise Glühlampen wird in derartigen Lichtquellen das emittierte Licht im Rahmen von Lumineszenzprozessen erzeugt, die in einem Leuchtmittel stattfinden. Als Lumineszenz bezeichnet man einen Vorgang, bei dem ein angeregtes Leuchtmittel unter Emission elektromagnetischer Strahlung in einen Zustand niedrigerer Energie übergeht (strahlende Desaktivierung). In der Praxis sind als Lumineszenzstrahler insbesondere solche Systeme von Interesse, bei denen die Anregung des Leuchtmittels in einem elektrischen Feld erfolgt. Die hierbei auftretende Emission von Licht und anderer elektromagnetischer Strahlung bezeichnet man als Elektrolumineszenz.

Neben Leuchtdioden (LEDs) bieten auch die so genannten Kondensator-Leuchtfolien eine technische Nutzung der Elektrolumineszenz. Bei den Kondensator-Leuchtfolien (Elektrolumineszenz- oder EL-Folie, Leuchtfolie, Lichtfolie) befindet sich das Leuchtmittel zwischen zwei Elektroden in einer besonderen Kondensatoranordnung. Die Anregung des Leuchtmittels erfolgt durch Anlegen eines elektrischen Wechselfelds an die Elektroden.

Auch für Kondensator-Leuchtfolien lassen sich Selbstklebemassen einsetzen, die mehrfachfunktional eingerichtet sind. So ist aus DE 10 2006 013 834 A1 beispielsweise eine Haftklebemasse bekannt, die als Bindermatrix für elektrolumineszierende Leuchtmittel eingesetzt wird. Als Beispiele für grundsätzlich einsetzbare Haftklebemassen sind in diesem Dokument unterschiedliche Klebemassensysteme allgemein aufgezählt, etwa solche auf der Basis von Poly(meth)acrylaten, Silikonen, Polysiloxanen, Synthesekautschuken, Polyurethanen sowie Klebemassensysteme auf Blockcopolymerbasis.

DE 10 2006 013 834 A1 beschreibt besonders ausführlich Selbstklebemassen auf Poly(meth)acrylatbasis, also Selbstklebemassen, die als Basispolymer ein Polymer aus einer (Meth)Acrylat-Monomermischung enthalten (die Bezeichnung (Meth)Acrylat dient im folgenden der vereinfachten Beschreibung und beinhaltet sowohl Acrylate als auch Methacrylate, das heißt deren Säuren wie auch deren Derivate, beispielsweise Ester). Insbesondere sind in diesem Dokument Mischungen benannt, die zu 70 Gew.-% bis 100 Gew.-% der Monomermischung einen oder mehrere (Meth) Acrylsäureester, die mit Alkylalkoholen mit 1 bis 30 C-Atomen verestert sind, enthalten und die darüber hinaus optional höchstens 30 Gew.-% eines oder mehrerer olefinisch ungesättigter Monomere mit funktionellen Gruppen aufweisen können. In der Praxis hat sich gezeigt, dass sich bei Verwendung dieser Selbstklebemassensysteme mit handelsüblichen Leuchtmitteln Elektrolumineszenzvorrichtungen von guter Leuchtkraft und Langzeitstabilität realisieren lassen.

Eine Aufgabe der vorliegenden Erfindung ist es, ein Basispolymer für eine Selbstklebemasse zur Verfügung zu stellen, die als Bindermatrix in einer Elektrolumineszenzvorrichtung eine noch größere Leuchtkraft sowie eine verbesserte Langzeitstabilität bietet als die aus dem Stand der Technik bekannten Polymere.

Diese Aufgabe wird überraschenderweise durch ein Polymer der eingangs genannten Art gelöst, dessen relative Permittivität erfindungsgemäß mehr als 4,5 beträgt. Es wurde festgestellt, dass bei einem haftklebrigen Polymer mit einer derartig hohen relativen Permittivität (Permittivitätszahl, relative Dielektrizitätskonstante; Formelzeichen: $\varepsilon_r$) die Leuchtdichte einer mit diesem Polymer hergestellten selbstklebenden Elektrolumineszenzmasse bei gleicher Schichtdicke der Elektrolumineszenzmasse signifikant höher ist als bei den bislang bekannten selbstklebenden Elektrolumineszenzmassensystemen.

In einer vorteilhaften Ausgestaltungsform ist das selbstklebrige Polymer ein Polymer aus einer Monomermischung, die (Meth)Acrylsäurederivate umfasst, die jeweils zumindest eine funktionelle Gruppe aus der Menge umfassend Cyanogruppen und Nitrogruppen aufweisen. Durch Verwendung dieser Monomere ist es möglich, Polymere zu erhalten, die einerseits selbstklebrig sind, deren relative Permittivität sich andererseits durch Änderung des Massenanteils dieser Monomere im resultierenden Polymer über einen breiten Bereich variieren lässt. Wichtig ist es bei der Verwendung dieser besonderen Monomere allerdings, dass diese zu einem Massenanteil von mindestens 45 Gew.-% in dem Polymer enthalten sind, damit ein Polymer erhalten wird, das die erfindungsgemäß erforderliche relative Permittivität von mehr als 4,5 aufweist.

Die Eignung dieser stark polaren Monomere zur Herstellung von selbstklebrigen Polymeren zeigte sich völlig unerwartet. Derartig polare Monomere werden üblicherweise verwendet, um Polymere mit besonders starkem inneren Zusammenhalt (Kohäsion) zu erhalten, was insbesondere dann gewünscht ist, wenn die mit diesen Polymeren verklebten Gegenstände repositionierbar sein sollen. Dem Fachmann ist jedoch ebenfalls bekannt, dass mit der Erhöhung der Kohäsion in der Regel eine Verringerung der Klebkraft und der Anfassklebrigkeit der Polymere einhergeht. Daher war es überraschend, dass bei Verwendung von (Meth)Acrylatmonomeren mit Cyanogruppen und/oder Nitrogruppen ein stark polares Polymer erhalten wird, das eine hohe Kohäsion aufweist und gleichzeitig eine hohe Klebkraft und Anfassklebrigkeit besitzt.

Hierbei hat es sich als besonders günstig herausgestellt, wenn die zumindest eine Cyanogruppe und/oder Nitrogruppe aufweisenden (Meth)Acrylsäurederivate im selbstklebrigen Polymer zu einem Massenanteil von maximal 90 Gew.-% vorliegen, da die resultierenden Polymere bei einem höheren Massenanteil nicht mehr hinreichend selbstklebrig sind, um als Basispolymer einer Selbstklebemasse dienen zu können. Insbesondere zeigt sich, dass die Polymere bis zu einem Gehalt an derartigen Monomeren von etwa 70 Gew.-% noch hervorragend haftklebrig, bis zu einem Gehalt von etwa 80 Gew.-% noch sehr gut heißschmelzklebrig und bei einem Gehalt zwischen 80 Gew.-% und 90 Gew.-% gerade noch heißschmelzklebrig sind. Je nach der konkreten Anwendung werden selbstklebrige Polymere mit einer hervorragenden Eignung als Basispolymer einer Selbstklebemasse, die gleichzeitig eine exzellente Leuchtdichte aufweist, insbesondere dann erhalten, wenn der Massenanteil der zumindest eine Cyanogruppe und/oder Nitrogruppe aufweisenden (Meth)Acrylsäurederivate zwischen 50 Gew.-% und 60 Gew.-% beträgt.

Besonders gute Ergebnisse werden erzielt, wenn das Polymer Monomere enthält, die gewählt werden aus der Gruppe umfassend unsubstituiertes oder substituiertes Cyanomethylacrylat, Cyanoethylacrylat, Cyanomethylmethacrylat, Cyanoethylmethacrylat und (Meth)Acrylsäurederivate mit O-(per)cyanoethylierten Sacchariden. In diesem Fall werden selbstklebrige Polymere erhalten, die eine signifikant höhere Langzeitstabilität aufweisen als herkömmliche selbstklebende Polymere. Dies äußert sich in einer relativen Permittivität des Polymers, die über einen deutlich längeren Zeitraum zumindest im Wesentlichen konstant bleibt, und darüber hinaus in einer erheblich langsameren zeitlichen Abnahme der Leuchtdichte bei einem Einsatz dieser Polymere in Elektrolumineszenzmassen.

Des weiteren ist es von Vorteil, wenn das selbstklebrige Polymer ein Polymer aus einer Monomermischung ist, die ferner substituierte und/oder unsubstituierte (Meth)Acrylsäureester der allgemeinen Formel $CH_2=CR^1-COOR^2$ umfasst, wobei $R^1$ ausgewählt wird aus der Gruppe umfassend H und $CH_3$ und $R^2$ ausgewählt wird aus der Gruppe umfassend substituierte und unsubstituierte Alkylketten mit 1 bis 20 Kohlenstoffatomen. Auf diese Weise wird ein selbstklebriges Polymer erhalten, dessen klebtechnischen Eigenschaften über einen weiten Bereich variiert und so an die konkreten Anforderungen angepasst werden können. Noch bessere Variationsmöglichkeiten für die klebtechnischen Eigenschaften ergeben sich, wenn das selbstklebrige Polymer ein Polymer aus einer Monomermischung ist, die ferner olefinisch ungesättigte Monomere mit funktionellen Gruppen aufweist.

Der zentrale Aspekt dieser Erfindung betrifft ein verbessertes Basispolymer für eine Selbstklebemasse, die als Bindermatrix in einer Elektrolumineszenzvorrichtung eingesetzt wird. Demzufolge bestand eine weitere, spezifische Aufgabe der vorliegenden Erfindung darin, eine Selbstklebemasse bereit zu stellen, die als Bindermatrix in einer Elek-

troluminenszenzvorrichtung eine erhöhte Leuchtkraft sowie eine verbesserte Langzeitstabilität bietet. Erfindungsgemäß wird zur Lösung dieser Aufgabe eine Selbstklebemasse eingesetzt, die eine relative Permittivität von mehr als 4,5 besitzt. Diese Ausgestaltung der Selbstklebemasse bietet gegenüber herkömmlichen Klebemassen den Vorteil einer signifikant höheren Leuchtdichte und einer längeren Lebensdauer bei einer unter Verwendung dieser Selbstklebemasse hergestellten Elektrolumineszenzvorrichtung.

Hierbei ist es besonders vorteilhaft, wenn als Basispolymer dieser Selbstklebemasse das zuvor beschriebene selbstklebrige Polymer eingesetzt wird, so dass die obenstehend aufgeführten Vorteile entsprechend auch für die Selbstklebemasse erhalten werden.

Insbesondere ist es dabei von Vorteil, wenn die Selbstklebemasse insgesamt eine relative Permittivität von weniger als 25 aufweist. Auf diese Weise können die dielektrischen Verluste (Imaginärteil der Permittivität) bei der Elektrolumineszenz gering gehalten werden, so dass ein besonders günstiger Kompromiss zwischen möglichst hoher Leuchtdichte einerseits und möglichst geringer Verlustleistung andererseits erhalten wird.

Ferner wird gemäß der vorliegenden Erfindung die Verwendung der zuvor beschriebenen Selbstklebemasse zur Verklebung von Komponenten eines elektronischen Geräts vorgeschlagen, wodurch sich funktionale Vorrichtungen mit besonders geringer Einbauhöhe realisieren lassen. Im Hinblick auf eine einfache Handhabbarkeit hat es sich zudem als günstig herausgestellt, wenn die Selbstklebemasse in einem selbstklebrigen Flächenelement vorliegt.

Einem weiteren Aspekt der vorliegenden Erfindung lag die Aufgabe zugrunde, eine selbstklebrige Elektrolumineszenzmasse zur Verfügung zu stellen, die gegenüber herkömmlichen selbstklebrigen Elektrolumineszenzmassen nicht nur über eine erhöhte Leuchtdichte verfügt, sondern diese auch über einen längeren Zeitraum bieten kann. Dies wird erfindungsgemäß durch eine Elektrolumineszenzmasse erreicht, die neben einem Leuchtmittel die zuvor beschriebene Selbstklebemasse enthält.

Gemäß der vorliegenden Erfindung wird ferner die Verwendung der zuvor beschriebenen selbstklebenden Elektrolumineszenzmasse zur Verklebung von Komponenten optischer Anzeigevorrichtungen und/oder Beleuchtungsvorrichtungen vorgeschlagen, was den Vorteil eines doppelt-funktionalen Systems bietet, so dass gesonderte Befestigungsmittel nicht erforderlich sind. Auch hinsichtlich dieser Elektrolumineszenzmasse hat es sich als besonders günstig herausgestellt, wenn diese zur leichteren Verklebbarkeit in einem selbstklebrigen Flächenelement vorliegt.

In diesem Zusammenhang war es ebenfalls sinnvoll, wenn der Massenanteil des partikulären Leuchtmittels in der selbstklebrigen Elektrolumineszenzmasse zwischen 1 Gew.-% und 90 Gew.-% beträgt, da sich mit einem Leuchtmittelgehalt von weniger als 1 Gew.-% auch für dicke Schichtdicken der Elektrolumineszenzmasse keine visuell wahrnehmbare Helligkeit mehr erzielen lässt, wohingegen die Elektrolumineszenzmasse bei einem höheren Leuchtmittelgehalt keinen hinreichend hohen inneren Zusammenhalt und auch keine ausreichende Klebkraft besitzt, so dass sich bei einem Leuchtmittelgehalt von mehr als 90 Gew.-% keine hinreichenden selbstklebrigen Eigenschaften realisieren lassen. Die Elektrolumineszenzmasse ist besonders vorteilhaft, wenn diese einen Leuchtmittelgehalt zwischen 40 Gew.-% und 75 Gew.-% aufweist, da hierbei eine gute Leuchtdichte erhalten wird und überdies auch eine gute Selbstklebrigkeit erzielt wird. Einen optimalen Kompromiss dieser beiden gegenläufigen Effekte bietet ein Leuchtmittelgehalt zwischen 55 Gew.-% und 65 Gew.-%.

Ferner ist es günstig, wenn als partikuläres Leuchtmittel ein Leuchtmittel auf der Basis von gekapseltem Zinksulfid eingesetzt wird. Auf diese Weise wird die Stabilität des Leuchtmittels signifikant erhöht und somit die Lebensdauer der Elektrolumineszenzmasse verbessert, also der mittlere Zeitraum, innerhalb dessen die Abnahme der für eine Spannung erreichbaren Leuchtdichte weniger als die Hälfte der anfänglichen Leuchtdichte bei dieser Spannung beträgt. Durch Verkapseln der Leuchtmittelpartikel ist es möglich, diese vor einer Einwirkung von Substanzen zu schützen, die die Leuchtkraft verringern, beispielsweise vor korrosiven Agenzien oder vor Adsorptiven, die als Adsorbate an der Teilchenoberfläche Zentren für strahlungslose Rekombinationsvorgänge bilden können.

Schließlich war es eine weitere Aufgabe der vorliegenden Erfindung, eine verbesserte Elektrolumineszenzvorrichtung zur Verfügung zu stellen, die auf einfache Weise zu fertigen ist und dabei eine hohe Leuchtdichte und Langzeitstabilität aufweist. Diese Aufgabe konnte durch Einsatz der erfindungsgemäßen Elektrolumineszenzmasse in einer Elektrolumineszenzvorrichtung gelöst werden, die ferner eine zumindest im Wesentlichen transparente erste Elektrode und eine zweite Elektrode aufweist.

Die vorliegende Erfindung stellt somit eine neuartige Klasse selbstklebriger Polymere zur Verfügung. Als selbstklebrig im Sinne dieser Anmeldung wird eine Substanz bezeichnet, die haftklebrig oder heißschmelzklebrig ausgebildet ist, die also von sich aus eine dauerhafte Verklebung mit dem Verklebungssubstrat erlaubt. Demzufolge umfasst der Begriff Selbstklebemasse ebenso Haftklebemassen wie Heißschmelzklebemassen.

Als haftklebrig wird ein Polymer bezeichnet, das bei Raumtemperatur bereits unter relativ schwachem Andruck eine Verklebung mit dem Substrat erlaubt. Im Gegensatz dazu wird ein Polymer als heißschmelzklebrig bezeichnet, wenn dieses erst bei erhöhten Temperaturen eine Verklebung mit dem Substrat eingeht, wobei die so erhaltene Verklebung auch bei einem anschließenden Abkühlen der Verklebung auf Raumtemperatur noch erhalten bleibt. Die Verklebbarkeit von haftklebrigen Polymeren wie auch von heißschmelzklebrigen Polymeren beruht auf ihren adhäsiven Eigenschaften.

Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften des Polymers oder einer Klebemasse an der Substratoberfläche und ist als Anfassklebrigkeit (dem so genannten Tack) und als Klebkraft bestimmbar. Während die Adhäsion eines Polymers allein von dessen molekularen Aufbau abhängig ist und somit eine intrinsische Größe des konkreten Polymers darstellt, kann in Klebemassen das Polymer mit weiteren Komponenten abgemischt vorliegen. Um die Adhäsion einer Klebemasse gezielt zu beeinflussen, werden der Klebemasse häufig Weichmacher und/oder klebkraftsteigernde Harze (so genannte Tackifier) zugesetzt.

Als Kohäsion bezeichnet man üblicherweise den physikalischen Effekt, der den inneren Zusammenhalt eines Stoffs oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Auch die Kohäsion ist durch den molekularen Aufbau des Polymers festgelegt, wobei es möglich ist, die Kohäsion gezielt zu erhöhen, indem das Polymer oder die Klebemasse einer zusätzlichen Vernetzung unterzogen wird, wofür das Polymer bzw. die Klebemasse reaktive (und somit vernetzbare) Bestandteile aufweisen muss (die sich bei einer Klebemasse auch separat als chemische Vernetzer zusetzen lassen) und/oder die Klebemasse in einer Nachbehandlung aktinischen (energiereichen) Strahlen ausgesetzt wird.

Die klebtechnischen Eigenschaften eines haftklebrigen Polymers werden in erster Linie von dem Verhältnis adhäsiver und kohäsiver Eigenschaften bestimmt. So ist es beispielsweise für einige Anwendungen wichtig, dass die eingesetzten Polymere hochkohäsiv sind, also über einen besonders starken inneren Zusammenhalt verfügen, während für andere Anwendungen eine besonders hohe Adhäsion erforderlich ist.

Entscheidend ist für die vorliegende Erfindung, dass das Polymer sowohl selbstklebrig ausgebildet ist als auch eine relative Permittivität von mehr als 4,5 aufweist. Diese beiden Eigenschaften sind intrinsische Eigenschaften des Polymers, also Eigenschaften des Polymers selbst und nicht etwa solche, die ausschließlich durch Hilfsstoffe hervorgerufen werden; dies schließt allerdings nicht aus, dass ein Polymer mit den entsprechenden Eigenschaften in einer Mischung mit Hilfsstoffen vorliegen kann, die diese Eigenschaften noch weiter beeinflussen.

Die meisten herkömmlichen Polymere weisen eine relative Permittivität um 3 auf und sind demzufolge zur Realisierung der erfinderischen Lehre nicht geeignet. Neben den für den Reaktionsablauf relevanten Reaktionsparametern während der Polymerisation - wie beispielsweise der Reaktionstemperatur, der Reaktionsdauer, dem Reaktordruck, dem Dosierprofil der Monomere, Initiatoren, Kettenüberträgern und Lösungsmitteln, des verwendeten Rührertyps, der Rührerdrehzahl, der Viskosität und des pH-Wertes der Reaktionsmischung - kann insbesondere die Auswahl der Monomere (oder gegebenenfalls auch der Makromonomere) einen starken Einfluss auf die relative Permittivität des resultierenden Polymers besitzen. Dabei können die entsprechenden Monomere so gewählt werden, dass in der Polymerisation ein selbstklebriges Polymer auf Polyurethan-, Acrylat-, Synthesekautschuk-, Polysiloxan- oder Polyesterbasis entsteht.

So lässt sich eine hohe relative Permittivität beispielsweise erreichen, wenn das Polymer aus einfach oder mehrfach mit Halogenen substituierten Monomeren hergestellt wird. Hierbei ist jedoch darauf zu achten, dass das Polymer selbstklebrig ist. So können zum Beispiel Polyvinylidenfluoride eine hinreichend hohe relative Permittivität aufweisen, ohne dabei selbstklebrig zu sein, so dass diese üblicherweise als erfindungsgemäßes Polymer nicht geeignet sind. Entsprechende Verbindungen, die als Monomere für Polymere mit einer hohen relativen Permittivität dienen können, sind dem Fachmann jedoch hinreichend bekannt. Unter diesen haben sich erfindungsgemäß neben mit Fluor substituierten Verbindungen insbesondere solche Monomere als günstig erwiesen, die einfach oder mehrfach mit Nitrogruppen (-NO$_2$) oder mit Cyanogruppen (-CN) substituiert sind.

Für den Fall eines Acrylat-basierenden Polymers (also eines Polymers, das aus einer Monomermischung hergestellt ist, die zu mindestens 50 %-Gew. Monomere enthält, deren Grundgerüst sich auf Acrylsäure oder Methacrylsäure zurückführen lässt) wird beispielsweise eine relative Permittivität von mehr als 4,5 erhalten, wenn dieses aus einer Monomermischung hergestellt ist, die zu mindestens 45 Gew.-% Monomere enthält, die jeweils eine oder mehrere Cyanogruppen und/oder Nitrogruppen aufweisen, wobei diese Monomere insbesondere zu einem Massenanteil von maximal 90 Gew.-% vorliegen können oder sogar nur zu einem Massenanteil zwischen 50 Gew.-% und 60 Gew.-%. Die Polymere können dabei beliebig ausgebildet sein etwa als Blockcopolymere oder statistische Polymere.

Als zumindest eine Nitrogruppe aufweisende (Meth)Acrylsäurederivate können grundsätzlich alle üblichen und geeigneten Verbindungen eingesetzt werden. Gleichfalls können als zumindest eine Cyanogruppe aufweisende (Meth) Acrylsäurederivate grundsätzlich alle üblichen und geeigneten Verbindungen gewählt werden. Bei Verwendung von Monomeren, die Cyanogruppen aufweisen, wird ein besonders polares Polymer erhalten, das jedoch weder feuchtigkeitsempfindlich oder wasserlöslich noch hygroskopisch ist und dabei eine allenfalls geringe Wasseraufnahme zeigt. Als Monomere mit Cyanogruppen können etwa solche der allgemeinen Formel $CH_2=C(R^a)(COOR^b)$ eingesetzt werden, wobei $R^a$ bei Acrylsäure oder einem Acrylsäurederivat H darstellt und bei Methacrylsäure oder einem Methacrylsäurederivat $CH_3$ darstellt, und wobei $R^b$ ein Rest ist, der sich von der allgemeinen Formel $-(CH_2)_c-CH(CN)-(CH_2)_d-H$ ableitet, wobei c = 0 bis 10 und d = 0 bis 10 sein kann, also beispielsweise - ohne sich durch diese Aufzählung einzuschränken - Cyanomethylacrylat, Cyanoethylacrylat, Cyanomethylmethacrylat und Cyanoethylmethacrylat. Zusätzlich zu oder anstelle von diesen Cyanoalkyl(meth)acrylaten lassen sich auch andere cyanofunktionalisierte (Meth)Acrylsäurederivate einsetzen, zum Beispiel solche, in denen der obige Rest $R^b$ einen O-(per)cyanoethylierten Zuckerbaustein enthält (also ein Saccharid, in dem eine Hydroxygruppe, mehrere Hydroxygruppen oder alle Hydroxygruppen als Cyanoethanolether vorliegt bzw. vorliegen), zum Beispiel O-percyanoethyliertes 2-(Glykosyloxy)ethylacrylat oder korrespondierende di-, oligo- und Polysaccharide. Anstelle von oder zusätzlich zu Glucose kann bei diesen Verbindungen natürlich auch von anderen Sacchariden ausgegangen werden, etwa von Mannose, Xylose und dergleichen.

Statt einer Verwendung von Monomeren mit Cyanogruppen und/oder Nitrogruppen ist es aber auch möglich, ein auf (Meth)Acrylaten basierendes haftklebriges Polymer unter Verwendung von anderen Monomeren zu erzeugen, die ebenfalls eine hohe relative Permittivität aufweisen, beispielsweise Vinylidenhalogenide, bei denen der obige Rest $R^b$ zum Beispiel sich von der allgemeinen Formel $-(CH_2CX_2)_n-CH_3$ herleitet, wobei n = 1 bis 50 und X ausgewählt wird aus der Gruppe umfassend F, Cl und Br.

Auf diese Weise lassen sich demnach Polymere erhalten, die nicht nur selbstklebrig sind und eine entsprechende relative Permittivität aufweisen, sondern auch hervorragende Isolationseigenschaften, niedrige (oder- für Spezialanwendungen -hohe) Verlustfaktoren und hohe optische Transparenzen aufweisen.

Neben derartigen (Meth)Acrylat-basierenden Polymeren können jedoch grundsätzlich auch alle anderen Polymere verwendet werden, die für Selbstklebemassen üblicherweise zum Einsatz kommen. In diesem Zusammenhang seien beispielhaft Selbstklebemassenpolymere auf Polysiloxanbasis, auf Polyesterbasis, auf Synthesekautschukbasis und/oder auf Polyurethanbasis genannt, ohne sich durch diese Angabe unnötig zu beschränken. Geeignete Haftklebemassenpolymere sind auch solche auf Blockcopolymerbasis, etwa Acrylatblockcopolymere oder Styrolblockcopolymere. Derartige Klebemassen sind aus dem Stand der Technik hinreichend bekannt, wobei auch bei diesen die relative Permittivität durch den Einsatz funktionalisierter Monomere mit Cyano-, Halogen- oder Nitro-Gruppen gezielt erhöht werden kann.

Als haftklebrige Polymere kommen grundsätzlich alle Polymersysteme mit geeigneten haftklebenden Eigenschaften in Frage, also haftklebrige Systeme. Die zur Herstellung der haftklebrigen Polymere dienenden Monomere werden insbesondere dermaßen gewählt, dass die resultierenden Polymere bei Raumtemperatur oder höheren Temperaturen als Haftklebemassen eingesetzt werden können.

Haftklebrig im Sinne der vorliegenden Erfindung ist ein Polymer, wenn es entsprechend "Handbook of Pressure Sensitive Adhesive Technology" von Donatas Satas (van Nostrand, New York 1989) haftklebende Eigenschaften besitzt.

Zur Erzielung einer für haftklebrige Polymere bevorzugten Glasübergangstemperatur $T_G$ der Polymere von $T_G \leq 25\,°C$ werden die Monomere üblicherweise derart ausgesucht und die mengenmäßige Zusammensetzung der Monomermischung derart gewählt, dass diese sich in Analogie zu der von Fox vorgestellten Gleichung so verhalten (vgl. T.G. Fox, Bull. Am. Phys. Soc. 1 (1956) 123), dass sich der gewünschte Wert für die Glasübergangstemperatur $T_G$ des resultierenden Polymers ergibt nach

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige (statische) Glasübergangstemperatur des Homopolymers aus den jeweiligen Monomeren n in K.

Als haftklebrige Polymere kommen grundsätzlich alle haftklebrigen Polymere in Frage, beispielsweise solche auf der Basis von Acrylaten und/oder Methacrylaten, Silikonen und/oder Synthesekautschuken, sofern diese die Anforderungen hinsichtlich der relativen Permittivität des resultierenden Polymers erfüllen.

So lassen sich insbesondere haftklebrige Polymere auf Basis von Acrylsäure und/oder Methacrylsäure und/oder auf Basis von Estern der vorgenannten Verbindungen einsetzen oder solche auf Basis von hydrierten Synthesekautschuken, da diese besonders alterungsstabil sind.

Es sind insbesondere Acrylat-basierende Polymere geeignet, die etwa durch radikalische Polymerisation erhältlich sind und die mindestens ein Acrylmonomer der allgemeinen Formel $CH_2=C(R^1)(COOR^2)$ enthalten, wobei $R^1$ gleich H oder ein $CH_3$-Rest ist und $R^2$ gleich H ist oder aus der Gruppe der gesättigten, unverzweigten oder verzweigten, substituierten oder unsubstituierten $C_1$- bis $C_{20}$-Alkylreste gewählt ist.

Spezifische Beispiele, ohne sich durch diese Aufzählung einzuschränken, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, beispielsweise Isobutylacrylat, 2-Ethylhexylacrylat, 2-Ethylhexylmethacrylat, Isooctylacrylat oder Isooctylmethacrylat.

Weitere einsetzbare Verbindungsklassen, die üblicherweise allerdings nur in einem geringen Stoffmengenanteil verwendet werden, sind monofunktionelle Acrylate bzw. Methacrylate, wobei der Rest $R^2$ aus der Gruppe der überbrückten oder nicht überbrückten Cycloalkylreste mit mindestens sechs Kohlenstoffatomen gewählt ist. Die Cycloalkylreste können auch substituiert sein, beispielsweise durch $C_1$- bis $C_6$-Alkylgruppen. Spezifische Beispiele sind Cyclohexylmethacrylat, Isobornylacrylat, Isobornylmethacrylat und 3,5-Dimethyladamantylacrylat.

In einer bevorzugten Vorgehensweise werden Acrylmonomere und/oder Comonomere eingesetzt, die einen oder mehrere Substituenten aufweisen, insbesondere polare Substituenten, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy- und Ethergruppen.

Es lassen sich nach einer vorteilhaften Ausgestaltung ferner Polymere einsetzen, die aus einer Monomermischung hergestellt werden, die zusätzlich zu dem Acrylmonomer olefinisch ungesättigte Monomere mit funktionellen Gruppen als Comonomere aufweist. Diese können beispielsweise gewählt werden aus der Gruppe umfassend Vinylverbindungen mit funktionellen Gruppen (beispielsweise Vinylester, Vinylether, Vinylhalogenide, Vinylidenhalogenide, Vinylverbindungen mit aromatischen Cyclen und Heterocyclen in alpha-Stellung), Maleinsäureanhydrid, Styrol, Styrol-Verbindungen, Vinylacetat, Acrylamide und mit Doppelbindung funktionalisierte Photoinitiatoren, ohne sich durch diese Aufzählung einzuschränken.

Grundsätzlich als funktionale Comonomere geeignete Monomere sind moderat basische Comonomere wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid und N-Isopropylacrylamid, wobei auch diese Aufzählung nicht abschließend ist.

Weitere bevorzugte Beispiele für derartige Comonomere sind (in einer ebenfalls nicht abschließenden Aufzählung) Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Glycerylmethacrylat, 6-Hydroxyhexylmethacrylat, Vinylessigsäure, Tetrahydrofurfurylacrylat, beta-Acryloyloxypropionsäure, Trichloracrylsäure, Fumarsäure, Crotonsäure, Aconitsäure und Dimethylacrylsäure.

In einer weiteren bevorzugten Vorgehensweise werden als Comonomere Vinylverbindungen, insbesondere Vinylester, Vinylether, Vinylhalogenide, Vinylidenhalogenide sowie Vinylverbindungen mit aromatischen Cyclen und Heterocyclen in Alphastellung eingesetzt, wobei als nicht ausschließende Beispiele etwa Vinylacetat, Vinylformamid, 4-Vinylpyridin, Ethylvinylether, Vinylchlorid, Vinylidenchlorid, Styrol, N-Vinylphthalimid, Methylstyrol, 3,4-Dimethoxystyrol, 4-Vinylbenzoesäure und Acrylnitril genannt seien.

Besonders vorteilhaft kann das mindestens eine Comonomer ein Photoinitiator mit einer copolymerisierbaren Doppelbindung sein, insbesondere ausgewählt aus der Gruppe enthaltend Norrish-I-Photoinitiatoren, Norrish-II-Photoinitiatoren, Benzoinacrylate oder acrylierte Benzophenone.

Demzufolge kann ein erfindungsgemäßes Polymer beispielsweise auch ein haftklebriges Polymer umfassen, das in Bezug auf die Monomermischung 70 bis 100 Gew.-% eines oder mehrerer Acrylsäureester und/oder Methacrylsäureester der Formel $CH_2=C(R^1)(COOR^3)$ aufweist, wobei der Rest $R^1$ die Substituenten H und/oder $CH_3$ und der Rest $R^3$ Alkylketten mit 1 bis 30 C Atomen darstellt, und das optional bis zu 30 Gew.-% eines oder mehrerer olefinisch ungesättigter Monomere mit funktionellen Gruppen aufweist.

Zur gezielten Verbesserung der Klebeigenschaften des Polymers werden der Polymerisationsmischung solche Monomere hinzugefügt, die die (statische) Glasübergangstemperatur $T_G$ des resultierenden Polymers gemäß Formel G1 verringern; solche Monomere, deren Homopolymer eine besonders niedrige Glasübergangstemperatur aufweisen, sind beispielsweise Propylacrylat, Butylacrylat, Isobutylacrylat, 2-Ethylhexylacrylat, Laurylacrylat, n-Hexylmethacrylat oder n-Octylmethacrylat, ohne sich durch diese Aufzählung zu beschränken.

Die mittleren Molekularmassen $M_n$ der aus den erfindungsgemäßen Polymeren hergestellten Haftklebemassen liegen sehr bevorzugt in einem Bereich von 20.000 g/mol bis 2.000.000 g/mol. Insbesondere für die weitere Verwendung als Schmelzhaftkleber werden Polymere mit Molekularmassen $M_n$ eingesetzt, die bevorzugt in einem Bereich von 100.000 g/mol bis 500.000 g/mol liegen. Einen hervorragenden Kompromiss bietet ein nicht-vernetztes Polymer mit einer Molekularmasse $M_n$ von 1.000.000 g/mol.

Die Angabe der mittleren Molekularmasse $M_n$ bezieht sich hierbei auf eine Bestimmung per Gelpermeationschromatographie, wozu 100 $\mu$l einer klarfiltrierten Probe (Probenkonzentration 4 g/l) mit einer Mischung aus 0,1 Vol.-% Trifluoressigsäure in Tetrahydrofuran als Eluent in eine Säulenkombination aus einer Vorsäule und mehreren Trennsäulen eingebracht wird. Als Vorsäule wird eine Säule vom Typ PSS-SDV (Firma Polymer Standards Service), 5 p, $10^3$ Å, ID 8,0 mm x 50 mm verwendet. Zur Auftrennung bei einer Durchflussmenge von 1,0 ml/min werden Säulen des Typs PSS-SDV (Firma Polymer Standards Service), 5 $\mu$, $10^3$ Å sowie $10^5$ Å und $10^6$ Å mit jeweils ID 8,0 mm x 300 mm eingesetzt (25 °C); die Detektion erfolgte mittels eines Differentialrefraktometers (Shodex RI71). Für die Kalibrierung wurde ein PMMA-Standard verwendet (Polymethylmethacrylat-Kalibrierung).

Als selbstklebrige Polymere kommen auch Polymere in Frage, die keine (Meth)Acrylate enthalten, also beispielsweise Synthesekautschuke oder Silikone.

Als Synthesekautschuk können grundsätzlich alle üblichen und geeigneten synthetisch herstellbaren Kautschuke zum Einsatz kommen. Ebenso sind als Silikone alle dem Fachmann bekannten, das jeweilige Anspruchsprofil erfüllenden und somit auch geeigneten Silikone einsetzbar. Zur Herstellung eines Basispolymers einer Silikon-basierenden Haftklebemasse können zum Beispiel kondensationsvernetzende Polymersysteme wie etwa Silikatharze, Polydimethylsiloxane oder Polydiphenylsiloxane, additionsvernetzende Polymersysteme wie etwa Silikatharze, Polydimethylsiloxane oder Polydiphenylsiloxane, die jeweils zusätzlich noch Vernetzersubstanzen enthalten (so genannte Crosslinker, zum Beispiel mit funktionellen Gruppen substituierte Hydrosilane), zum Einsatz kommen, ohne allerdings auf diese Systeme beschränkt zu sein.

So sind für den Einsatz in Silikonhaftklebemassen beispielsweise kondensationsvernetzende Polymersysteme unter den Bezeichnungen DC 280™, DC 282™, Q2-7735™, DC 7358™ und Q2-7406™ von Dow Corning, PSA 750™, PSA 518™ und PSA 910™ von GE Bayer Silikones, KRT 001™, KRT 002™ und KRT 003™ von ShinEtsu, PSA 45559™ von Wacker Silikones oder PSA 400™ von Rhodia sowie additionsvernetzende Polymersysteme unter den Bezeichnungen DC 7657™ und DC 2013™ von Dow Corning, PSA 6574™ von GE Bayer Silikones oder KR 3700™ und KR 3701™ von ShinEtsu kommerziell erhältlich, ohne durch die Aufzählung den Gegenstand der Erfindung zu beschränken.

Ferner sind auch solche Silikone grundsätzlich einsetzbar (ohne sich dadurch in der Wahl auf konkrete Silikone einzuschränken), die bei einer Anwendung als Basispolymere in einer Haftklebemasse chemisch oder physikalisch vernetzbar ausgebildet sind und die in der Haftklebemasse zur Anwendung vernetzt werden. Dies können insbesondere Silikone sein, die in einer radikalischen Reaktion vernetzt werden können. Hierdurch werden die Auswirkungen einer zeitabhängigen Alterung der Silikon-basierenden Haftklebemasse signifikant verringert, was sich in einer steigenden Kohäsion und einer verminderten Adhäsion widerspiegelt. Eine derartige radikalische Vernetzung kann beispielsweise chemisch durch den Einsatz von so genannten BPO-Derivaten (Derivate des Benzoylperoxids) und/oder durch den Einsatz von Elektronenstrahlen in einer so genannten Elektronenstrahlhärtung (ESH) herbeigeführt werden.

Aus Silikonen lassen sich unter anderem auch Haftklebemassen erhalten, die eine hohe Klebkraft auf unpolaren Substraten oder auf silikonisierten und/oder silikonhaltigen Untergründen aufweisen, etwa auf Silikonkautschuken und/oder Silikonschäumen. Derartige Silikon-basierende Haftklebemassen lassen sich aus Silikonen unter anderem durch abschließende Vernetzung der Klebemasse mittels Elektronenstrahlhärtung erhalten, was eine Vielzahl an Vorteilen bietet: So führen etwa die durch die Elektronenstrahlhärtung erzeugten Radikale zu einer Vernetzung der Silikon-basierenden Haftklebemasse. Darüber hinaus kann infolge einer Elektronenstrahlhärtung ein fester Verbund der Haftklebemasse mit dem entsprechenden (unpolaren) Untergrund erzielt werden, auf dem die Haftklebemasse verklebt wird (beispielsweise einer PET-Folie). Dadurch wird eine ansonsten mögliche Migration von Bestandteilen des Klebeverbunds zu der Verklebungsebene hin, die weich machende Eigenschaften aufweisen und daher im Klebeverbund eine Verringerung der Klebkraft zur Folge haben könnten, signifikant reduziert und eine Änderung der Eigenschaften verhindert, so dass die Haftklebemasse ihre große Temperaturstabilität beibehält.

Das erfindungsgemäße Polymer kann aber auch heißschmelzklebrig ausgebildet sein. Als heißschmelzklebrige Polymere kommen grundsätzlich alle Polymersysteme mit geeigneten heißschmelzklebenden Eigenschaften in Frage, also heißschmelzklebrige Systeme. Heißschmelzklebrig im Sinne der vorliegenden Erfindung ist ein Polymer, wenn nach der schmelzeförmigen Applikation auf den Haftgrund und anschließendem Abkühlen die Klebkraft bei Raumtemperatur nach ASTM D 3330-04 (bei einer Abzugsgeschwindigkeit von 300 mm/min auf dem zu verklebenden Haftgrund) größer als 1 N/cm ist, insbesondere größer ist als 3 N/cm oder sogar größer als 5 N/cm.

Als erfindungsgemäßes heißschmelzklebriges Polymer können alle üblichen und geeigneten heißschmelzklebrigen Polymere eingesetzt werden, beispielsweise solche auf der Basis von Synthesekautschuken, von thermoplastischen Materialien, von Elastomeren mit Modifikationsharzen, von Acrylsäurederivaten-Vinyl-Copolymeren und von acrylathaltigen Blockcopolymeren.

Unter diesen selbstklebrigen Polymeren haben sich neben anderen auch solche aus der Gruppe umfassend Polyolefine und Copolymere von Polyolefinen sowie deren säuremodifizierte Derivate, ionomere, Polyamide und deren Copolymere sowie Blockcopolymere wie Styrol- Blockcopolymere als grundsätzlich einsetzbar herausgestellt.

Im Hinblick auf die heißschmelzklebrigen Eigenschaften können diese Polymere einer nachträglichen Vernetzung unterzogen werden. Ein hoher Vernetzungsgrad lässt sich etwa in einem Vernetzungsschritt mit Elektronenstrahlen erzielen. Typische Bestrahlungsvorrichtungen, die zum Einsatz kommen können, sind Linearkathodensysteme, Abtastsysteme (Scannersysteme) oder Segmentkathodensysteme, sofern es sich hierbei um Elektronenstrahlbeschleuniger handelt. Eine ausführliche Beschreibung des Standes der Technik und die wichtigsten Verfahrensparameter findet man bei Skelhorne, "Electron Beam Processing, in Chemistry and Technology of UV and EB Formulation for Coatings, Inks and Paints", Vol. 1, 1991, SITA, London. Typische Beschleunigungsspannungen liegen im Bereich zwischen 50 kV und 500 kV, vorzugsweise im Bereich zwischen 80 kV und 300 kV. Die angewandten Streudosen bewegen sich zwischen 5 kGy bis 150 kGy, insbesondere zwischen 20 kGy und 100 kGy. Es können auch andere Verfahren eingesetzt werden, die eine hochenergetische Bestrahlung ermöglichen.

Zur Verringerung der für eine Vernetzungsreaktion erforderlichen Strahlendosis kann das heißschmelzklebrige Polymer aus einer Monomermischung hergestellt werden, die zusätzlich Vernetzer und/oder Promotoren zur Vernetzung enthält, insbesondere solche, die mittels Elektronenstrahlen oder thermisch anregbar sind. Geeignete Vernetzer für die Elektronenstrahlvernetzung sind etwa bifunktionelle oder multifunktionelle Acrylate oder Methacrylate oder Triallylcyanurate sowie Triallylisocyanurate. Als thermisch aktivierbare Vernetzer werden bevorzugt bifunktionelle oder multifunktionelle Epoxide, Hydroxide, Isocyanate oder Silane eingesetzt.

Ein weiterer Aspekt der vorliegenden Erfindung betrifft eine Selbstklebemasse mit einer relativen Permittivität von mehr als 4,5. Als Selbstklebemasse werden selbstklebrige Klebemassen bezeichnet, also haftklebrige Klebemassen (Haftklebemassen) und heißschmelzklebrige Klebemassen (Heißschmelzklebemassen). Klebemassen enthalten zumindest ein Basispolymer, wobei außerdem gegebenenfalls weitere Rezeptierungsbestandteile vorhanden sein können, beispielsweise andere Polymere oder Füllstoffe. Als Basispolymer einer Klebemasse bezeichnet man ein Polymer, dessen grundlegende Eigenschaften die klebtechnischen Eigenschaften der gesamten Klebemasse bestimmen, wobei selbstverständlich nicht ausgeschlossen ist, dass die Gesamteigenschaften der Klebemasse durch Verwendung von modifizierenden Hilfsoder Zusatzstoffen oder von anderen Polymeren in der Klebemasse zusätzlich beeinflusst werden. Im einfachsten Fall besteht eine Klebemasse nur aus ihrem Basispolymer.

Erfindungsgemäß besitzt die Klebemasse eine relative Permittivität von mehr als 4,5, insbesondere eine relative Permittivität zwischen 4,5 und 25. Dabei kann die Klebemasse das zuvor beschriebene selbstklebrige Polymer aufweisen. Enthält die Klebemasse neben diesem Polymer jedoch ausschließlich solche weiteren Rezeptierungsbestandteile, deren relative Permittivität gering ist, so ist es erforderlich, dass ein Polymer mit einer entsprechend höheren relativen Permittivität eingesetzt wird, damit die relative Permittivität der Selbstklebemasse insgesamt einen Wert von 4,5 übersteigt.

Die erfindungsgemäßen Selbstklebemassen lassen sich ebenfalls realisieren, wenn ein selbstklebriges Polymer mit einer relativen Permittivität verwendet wird, die geringer als 4,5 ist. In diesem Fall muss die Selbstklebemasse jedoch zusätzlich andere Rezeptierungsbestandteile wie etwa Zusatzstoffe enthalten, die selbst eine hohe relative Permittivität besitzen. Diese Rezeptierungsbestandteile müssen dann in hinreichend großer Menge enthalten sein, um der Selbstklebemasse insgesamt eine relative Permittivität von mehr als 4,5 zu verleihen. Aus diesem Grund werden dazu bevorzugt Zusatzstoffe eingesetzt, deren relative Permittivität besonders hoch ist und die gleichzeitig einen niedrigen Wassergehalt aufweisen, um das Auftreten von etwaige Abbauprozesse der Leuchtmittel oder von Wasseradsorption an der Oberfläche der Leuchtmittelpartikel zu vermindern; diese Zusatzstoffe können beispielsweise anorganische Füllstoffe oder organische Additive sein.

Als Beispiele für grundsätzlich einsetzbare anorganische Füllstoffe seien - ohne sich dadurch einzuschränken - Strontiumtitanatpartikel oder Bariumtitanatpartikel genannt, die in der Selbstklebemasse zur Realisierung des erfinderischen Konzepts in hinreichend hoher Konzentration vorliegen müssen. Günstigerweise werden solche Partikelsysteme eingesetzt, die einen sehr kleinen mittleren Partikeldurchmesser aufweisen, vorzugsweise im Nanometerbereich. Auf diese Weise kann eine Selbstklebemasse erhalten werden, die eine hohe Klebkraft besitzt und in der nur wenig Lichtstreuung auftritt. Somit wird eine besonders transparente Selbstklebemasse, in die das Leuchtmittel später besonders leicht eingearbeitet werden kann, und ebenfalls eine entsprechende Elektrolumineszenzmasse mit besonders hoher von außen wahrnehmbarer Leuchtdichte erhalten.

Als Beispiel für ein organisches Additiv seien - ohne sich hierdurch einzuschränken - polymere Additive genannt, etwa halogenierte Polymere, die eine hohe Verträglichkeit sowie eine guten Mischbarkeit mit gängigen Lösungsmitteln aufweisen. Insbesondere seien unter diesen Polymere auf Basis von Polyvinylidenfluorid, Polyacrylnitril (PAN), Cellulose, Poly(butadien-co-acrylnitril), Poly(iminoadipoyl-iminohexamethylen), Poly(iminohexamethylen-iminosebacoyl), Polyvinylacetat, Poly[imino(1-oxododecamethylen)], Poly[imino(1-oxohexamethylen)], Polypropylenglycol, Polyethylenglycol, Polysulfonen, Polyurethanen, Polyetheramiden, Vinylidenfluorid-Hexafluoropropylen-Copolymeren, Vinylidenfluorid-Chlortrifluorethylen-Copolymeren, oder Vinylidenfluorid-Hexafluoropropylen-Chlortrifluorethylen-Terpolymeren genannt. Zur Verbesserung der klebtechnischen Eigenschaften dieser Polymere können diese mit Harzen abgemischt (compoundiert) werden, die eine hohe Permittivität aufweisen, beispielsweise mit entsprechend modifizierten ungesättigten und gesättigten Kohlenwasserstoffharzen, Terpenphenolharzen, kolophoniumbasierten Harzen und Polyterpenharzen, die aus alpha-Pinen- und/oder beta-Pinen- und/oder delta-Limonenbausteinen aufgebaut sind.

Zusätzlich zu dem Basispolymer kann die Selbstklebemasse also auch weitere Rezeptierungsbestandteile und/oder Zuschlagsstoffe umfassen. Neben den Rezeptierungsbestandteile, die die relative Permittivität der Klebemasse erhöhen, können dies zum Beispiel Hilfsstoffe, Pigmente, rheologische Additive, Additive zur Verbesserung der Haftung, Weichmacher (Plastifizierungsmittel), Harze, Elastomere, Alterungsschutzmittel (Antioxidantien), Lichtschutzmittel, UV-Absorber, optische Aufheller sowie sonstige Hilfs- und Zusatzstoffe, beispielsweise Trockenmittel (etwa Molekularsieb-Zeolithe oder Calciumoxid), Fließ- und Verlaufmittel, Benetzer wie Tenside oder Katalysatoren sein.

Als Hilfsstoffe können alle fein gemahlenen festen Zusatzstoffe wie zum Beispiel Kreide, Magnesiumcarbonat, Zinkcarbonat, Kaolin, Bariumsulfat oder Calciumoxid eingesetzt werden. Weitere Beispiele sind Talkum, Glimmer, Kieselsäure oder Silikate. Natürlich können auch Mischungen der genannten Stoffe eingesetzt werden.

Die eingesetzten Pigmente können organischer oder anorganischer Natur sein. Es kommen alle Arten organischer oder anorganischer Farbpigmente in Frage, beispielsweise Weißpigmente zur Verbesserung der Licht- und UV-Stabilität.

Beispiele für rheologische Additive sind pyrogene Kieselsäuren, Schichtsilikate (beispielsweise Bentonite), hochmolekulare Polyamidpulver oder Pulver auf der Basis von Rhizinusölderivaten.

Additive zur Verbesserung der Haftung können zum Beispiel Stoffe aus den Gruppen der Polyamide, Epoxide oder Silane sein.

Beispiele für Weichmacher zur Verbesserung der Klebfähigkeit sind Phthalsäureester, Trimellitsäureester, Phosphorsäureester, Adipinsäureester sowie Ester anderer acyclischer Dicarbonsäuren, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitrilkautschuke oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für klebrigmachende Harze darstellen, Wollwachs und andere Wachse, Silikone sowie Polymerweichmacher wie etwa Polyester oder Polyurethane.

Optische Aufheller sind Verbindungen, die Licht aus dem ultravioletten Bereich des Spektrums absorbieren und eine Fluoreszenzemission im sichtbaren Bereich des Spektrums aufweisen, vorzugsweise bei Wellenlängen von etwa 400 nm bis etwa 500 nm, wobei die Fluoreszenz eine in demselben Wellenlängenbereich auftretende Eigenabsorption der Selbstklebemasse überdeckt und so die Selbstklebemasse insgesamt optisch heller erscheinen lässt. Beispiele hierfür sind, ohne sich durch diese Aufzählung einzuschränken, Stilben-, Ethylen-, Cumarin-, Naphthalimid- oder Pyrazolderivate. Diese können der Selbstklebemasse in reiner Form oder als Mischung verschiedener optischer Aufheller zugesetzt werden.

Die Rezeptierung der Klebemasse mit weiteren Bestandteilen wie zum Beispiel Hilfsstoffen und Weichmachern, ist ebenfalls Stand der Technik.

Ferner können zur Optimierung der klebtechnischen Eigenschaften den erfindungsgemäßen Selbstklebemassen Harze beigemischt werden. Als zuzusetzende klebrigmachende Harze (die Klebkraft steigende Harze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- sowie andere Kohlenwasserstoffharze. Beliebige Kombinationen dieser und weiterer Harze können eingesetzt werden, um die Eigenschaften der resultierenden Klebemasse wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Die erfindungsgemäße Selbstklebemasse kann dazu verwendet werden, die Komponenten von elektronischen Geräten zu verkleben. Dies können grundsätzlich alle Komponenten sein, beispielsweise Gehäuseteile, Schutz- oder Sichtfenster oder Teile der elektronischen Schaltkreise aus allen hierfür üblichen Materialien, insbesondere Polymeren, Glas, Keramik und Metallen. Als wichtiges funktionales Beispiel sei auch eine Verklebung von Kondensatorelektroden genannt, wobei die erfindungsgemäße Selbstklebemasse zusätzlich zu dem Fixieren der Elektroden auch als Dielektrikum dient und daher keine Beimengung eines Leuchtmittels aufzuweisen braucht.

Im einfachsten Fall - wenn die hohe Permittivität der Selbstklebemasse eine intrinsische Eigenschaft des Basispolymers ist - kann die Selbstklebemasse lediglich aus dem Basispolymer bestehen, ohne dass sie weitere Zusatzstoffe aufweist. Das einfachste - wenngleich für die meisten Anwendungen nicht optimale - Polymer ist demzufolge ein intrinsisch haftklebriges Homopolymer mit der entsprechenden Permittivität. Vorteilhafterweise wird die erfindungsgemäße Selbstklebemasse jedoch als Bestandteil einer Elektrolumineszenzmasse verwendet, die im einfachsten Fall aus der Selbstklebemasse und Leuchtpartikeln oder nicht partikulären Leuchtmittel besteht.

Die erfindungsgemäße Selbstklebemasse kann auf einem temporären oder permanenten Träger oder auch direkt auf den Haftgrund aufgetragen werden. Hierfür sind grundsätzlich alle dem Fachmann bekannten Verfahren geeignet, etwa die Beschichtung aus der Schmelze (beispielsweise nach vorheriger Aufkonzentration), aus Dispersion oder aus Lösung. Zum Auftragen der Selbstklebemassen aus einer Lösung wird die Selbstklebemasse in einem geeigneten Lösemittel gelöst. Hierfür können neben den herkömmlicherweise verwendeten Lösungsmitteln wie Aceton, Benzin, Ethylacetat, Methylethylketon, Ethanol, Isopropanol oder Toluol auch höher siedende Lösungsmittel wie beispielsweise Ethylenglykolmonoethyletheracetat, Diethylenglycolmonoethyletheracetat, Ethylenglycolmonoethylether, Diethylenglycolmonoethylether, Diethylenglycoldiacetat, Ethylenglycolmonomethyletheracetat, Methylglycolacetat und Ethylenglycolmonoacetat vorteilhaft sein. Bei der Wahl des Lösungsmittels kommt es auf die gute Beschichtbarkeit der Polymerlösung auf dem jeweiligen Substrat sowie auf die gute Verträglichkeit mit dem Polymer oder Polymergemisch an. Entsprechend der jeweiligen Beschichtungsmethode kann der Feststoffgehalt variabel festgelegt werden.

Die Selbstklebemasse kann somit als Bestandteil einer Elektrolumineszenzmasse vorliegen. Als Elektrolumineszenzmasse wird eine chemische Zusammensetzung bezeichnet, die derart ausgebildet ist, dass sie - in ein elektrisches Feld hinreichend hoher Feldstärke eingebracht - in einem Elektrolumineszenzprozess erzeugte elektromagnetische Strahlung emittiert. Demzufolge weist eine Elektrolumineszenzmasse also zwingend elektrolumineszierende Zentren auf, die in die erfindungsgemäße Selbstklebemasse als dielektrische Matrix eingebettet sind. Diese Elektrolumineszenz-Zusätze können vorliegend beispielsweise ein partikuläres Leuchtmittel in der Elektrolumineszenzmasse sein. Der Elektrolumineszenzmasse können dazu insbesondere elektrolumineszierende Füllstoffe und/oder Nachleuchtpartikel beigemengt sein.

Leuchtmittel können beispielsweise bereits zu der zu polymerisierenden Monomermischung, zu dem im Rahmen der Polymerisation erhaltenen Basispolymer oder erst beim Abmischen der Selbstklebemasse hinzugegeben werden, was beispielsweise in einem Lösemittelprozess erfolgen kann, vorzugsweise unter Einsatz von Lösemitteln mit einem möglichst geringen Wassergehalt. In alternativer Vorgehensweise kann das Leuchtmittel auch innerhalb eines Heißschmelzprozesses (Hotmeltprozess) homogen in die geschmolzene Haftklebemasse eingearbeitet werden. Hierfür werden etwaige in der Schmelze vorhandene Lösemittelreste in einem Aufkonzentrationsextruder entfernt und die Leuchtmittelpartikel der Selbstklebemasse im lösemittelfreien oder lösungsmittelarmen Zustand hinzugegeben.

Der Massenanteil des Leuchtmittels in der Elektrolumineszenzmasse kann beliebig geeignet gewählt werden und beträgt in dem erfindungsgemäßen System üblicherweise zwischen 1 Gew.-% und 90 Gew.-%, vorzugsweise zwischen 40 Gew.-% und 75 Gew.-%, insbesondere zwischen 55 Gew.-% und 65 Gew.-%.

Als Leuchtmittel lassen sich sämtliche bekannten und geeigneten Systeme einsetzen; diese basieren häufig auf Silikaten oder auf dotierten II/VI-Halbleitern wie etwa Zinksulfid. Kommerzielle Elektrolumineszenzpigmente sind etwa unter der Bezeichnung GlacierGLO™ von OSRAM Sylvania in unterschiedlichen Farben erhältlich, beispielsweise in blau, blau-grün, grün, orange und weiß. Zur Verbesserung der Langzeitstabilität der bisweilen feuchtigkeitsempfindlichen Elektrolumineszenzphosphorteilchen können diese von einer dünnen Schicht eines inerten Materials großer Bandlücke umgeben sein und somit als gekapselte Partikel vorliegen, beispielsweise als mit Aluminiumoxid umhüllte dotierte Zinksulfidpartikel mit einem mittleren Durchmesser im Bereich von 30 $\mu$m bis 40 $\mu$m.

Eine derartige Elektrolumineszenzmasse lässt sich zum Verkleben von Komponenten optischer Anzeigevorrichtungen und/oder Beleuchtungsvorrichtungen verwenden, also etwa von elektronischen Bauteilen, Gehäuseteilen, Sichtfenstern und dergleichen. Unter diesen möglichen Anwendungen steht jedoch der Einsatz der Elektrolumineszenzmasse als elektrolumineszierende Lichtquelle im Vordergrund. Eine derartige Lichtquelle kommt in Elektrolumineszenzvorrichtungen zum Einsatz, also in Vorrichtungen, die Licht in einem Elektrolumineszenzprozess erzeugen, beispielsweise in Lampen und anderen elektrischen Beleuchtungseinrichtungen. Rein exemplarisch sei hier auf die Anwendung als großflächige Beleuchtungseinrichtung verwiesen, die mit niedriger Leuchtdichte im Dauerbetrieb eine indirekte Raumbeleuchtung ermöglicht, beispielsweise als Leuchttapete oder als Hintergrundbeleuchtung in Flüssigkristallanzeige-Bildschirmen. Darüber hinaus werden derartige Beleuchtungseinrichtungen auch in funktionalen Anwendungen eingesetzt, etwa als Nacht- oder Notbeleuchtung, als beleuchteter Werbeträger, als Dekorationselement im Bereich der Innenrichtung, als selbstleuchtendes Anzeigeschild oder für aktiv leuchtende Bildpunkte in einem Anzeigegerät, etwa einem Mobildisplay, einem Computermonitor oder Fernseher.

Eine Elektrolumineszenzvorrichtung weist üblicherweise zumindest zwei voneinander beabstandete Elektroden auf, mit denen jeweils eine Anschlussleitung elektrisch leitend verbunden ist. Im Raum zwischen den Elektroden ist erfindungsgemäß eine Elektrolumineszenzmasse angeordnet. Wird ein elektrisches Wechselfeld an die Elektroden angelegt, so wird das Leuchtmittel angeregt und so in einen Zustand höherer Energie überführt; die Relaxation findet dann unter Aussendung von elektromagnetischer Strahlung statt. Um dabei eine möglichst hohe Beleuchtungsintensität zu erhalten, ist es erforderlich, dass der elektrische Feldgradient am Ort der Leuchtmittelpartikel besonders hoch ist. Die emittierte elektromagnetische Strahlung liegt vorzugsweise im Bereich der Wellenlängen von sichtbarem Licht, im Bereich des ultravioletten Spektrums oder im Bereich der Wellenlängen infraroter Strahlung. Erfindungsgemäß lassen sich auch mehrere dieser Elektrolumineszenzvorrichtungen nebeneinander anordnen, etwa in Form eines gezielt ansteuerbaren Rasters (frei wählbare Anzeige) oder als festgelegte Formstrukturen. Typische Betriebsspannungen für derartige Elektrolumineszenzvorrichtungen liegen im Bereich von 20 V bis etwa 400 V bei einer Frequenz von 50 Hz bis 1 kHz, ohne hierauf beschränkt zu sein.

Grundsätzlich kann eine Elektrolumineszenzvorrichtung unterschiedliche Strukturen besitzen. Als praktisch sinnvoll hat sich eine Anordnung herausgestellt, in der die Elektroden und die Elektrolumineszenzmasse als Schichtung von mindestens drei Lagen vorliegt, nämlich einer unteren Elektrode, einer Elektrolumineszenzmasseschichtung und einer oberen Elektrode.

Die Elektroden können aus allen üblichen und geeigneten elektrisch leitfähigen Materialien bestehen, etwa aus Metallen (wie beispielsweise Aluminium, Silber, Kupfer oder Gold), aus elektrisch leitenden Polymeren (wie beispielsweise solche mit Poly(3,4-ethylendioxythiophen (PEDOT), etwa Baytron™) oder aus elektrisch leitenden Polymerabmischungen (wie beispielsweise Polymere mit Graphit- oder Rußbeimengungen), insbesondere eine elektrisch leitfähige Klebemasse. Hierbei ist es besonders günstig, wenn die obere Elektrode (Frontelektrode) zumindest im Wesentlichen transparent ausgebildet ist, beispielsweise als Indiumzinnoxidschicht (ITO-Schicht), als Antimon-dotierte Zinndioxidschicht (ATO), als Fluor-dotierte Zinndioxidschicht (FTO) oder als Aluminium-dotierte Zinkoxidschicht (AZO). Diese Schichten können zum Beispiel auf einem optisch transparenten Träger vorliegen, etwa einem starren Glasträger oder einem flexiblen Folienträger, oder auch als trägerfreie Beschichtungen vorgesehen sein, etwa einem nanostrukturiertem Pulver wie beispielsweise aus Indiumzinnoxidpulver. Die untere Elektrode (Rückelektrode) kann mit der oberen Elektrode identisch sein oder von dieser verschieden und dann etwa aus einer metallischen Folie, einem Vlies oder Gitter bestehen. Natürlich ist es auch möglich, als Elektroden Kombinationen dieser Materialien einzusetzen, so dass etwa eine Indiumzinnoxidschicht in Kombination mit einer organischen leitfähigen Polymerbeschichtung (zum Beispiel einer Beschichtung enthaltend PEDOT) als obere Elektrode und/oder als untere Elektrode verwendet werden kann, wodurch die Flexibilität einer ansonsten relativ spröden Indiumzinnoxidschicht signifikant erhöht werden kann. Die geometrische Form der Elektroden wird entsprechend dem konkreten Einsatzzweck gewählt.

Mit dem zuvor beschriebenen Aufbau lassen sich besonders dünne Elektrolumineszenzvorrichtungen erzeugen, etwa solche mit einer Dicke von insgesamt 100 $\mu$m oder weniger. Wenngleich bei einer Betriebsspannung von 50 V die Dicke der Elektrolumineszenzmasseschicht in erster Linie für die erreichbare Helligkeit der Elektrolumineszenzvorrichtung von Bedeutung ist, so ist es bei höheren Betriebsspannungen - beispielsweise bei einer Wechselspannung von 230 V - erforderlich, dass die Schicht hinreichend dick ist, um einen Spannungsdurchschlag und somit eine irreversible Beschädigung der Elektrolumineszenzvorrichtung zu vermeiden. Große Schichtdicken erfordern es wiederum, dass die Elektrolumineszenzmasse bei den Wellenlängen der emittierten Strahlung möglichst wenig Absorption und Streuung zeigt.

Die Selbstklebemasse wie auch die Elektrolumineszenzmasse können erfindungsgemäß direkt auf den Haftgrund aufgetragen werden oder aber als Bestandteil eines selbstklebrigen Flächenelements eingesetzt werden. Als Flächenelement im Sinne dieser Anmeldung gelten insbesondere alle üblichen und geeigneten Gebilde mit im Wesentlichen flächenförmiger Ausdehnung. Diese ermöglichen eine Verklebung und können dabei verschieden ausgestaltet sein, insbesondere flexibel, als Klebefolie, Klebeband, Klebeetikett oder als Formstanzling. Das Flächenelement kann einseitig oder beidseitig selbstklebend ausgerüstet sein und dabei einen permanenten Träger aufweisen oder aber trägerfrei ausgebildet sein, etwa als Transferklebeband.

Somit können besonders einfache Flächenelement-Aufbauten etwa aus einer trägerfreien Klebemasseschichtung der erfindungsgemäßen Selbstklebemasse oder Elektrolumineszenzmasse, aus einem einseitig selbstklebend ausgerüsteten permanenten Träger mit der erfindungsgemäßen Selbstklebemasse oder Elektrolumineszenzmasse oder auch aus einem beidseitig selbstklebend ausgerüsteten Träger bestehen, bei dem beide oder zumindest eine der beiden Selbstklebemasseschichten die erfindungsgemäße Selbstklebemasse oder Elektrolumineszenzmasse enthalten bzw. enthält.

Als Träger wird jegliches zumeist im Wesentlichen flächenförmige Strukturelement bezeichnet, dem die Funktion eines permanenten oder temporären Trägers zukommt. Träger können alle geeigneten Trägermaterialien enthalten, etwa Folien Kunststoffe, textile Flächenelemente (beispielsweise Gewebe, Gelege, Gewirke und Vliese) oder Kombinationen aus solchen Materialien, wobei ein Trägerelement vollflächig geschlossen oder durchbrochen ausgebildet sein kann. Hierfür typische Materialien sind etwa BOPP (biaxial orientiertes Polypropylen), MOPP (monoaxial orientiertes Polypropylen), PET (Polyethylenterephthalat), PVC (Polyvinylchlorid), PUR (Polyurethan), PE (Polyethylen), PVDF (Polyvinylidenfluorid), PE/EVA (Polyethylen-Ethylenvinylacetat-Copolymere) und EPDM (Ethen-Propylen-Dien-Terpolymere) genannt. Im Unterschied zu permanenten Trägern sind temporäre Träger an zumindest einer Seitenfläche haftvermindernd ausgerüstet. Als temporäre Träger lassen sich etwa auch Trennpapiere einsetzen, zum Beispiel Glassine-Papiere, Kraft-Papiere oder polyolefinisch beschichtete Papiere.

Für die Herstellung eines derartigen Flächenelements mit einer Selbstklebemasse oder Elektrolumineszenzmasse kann auf alle üblichen und geeigneten Verfahren zurückgegriffen werden. So ist es beispielsweise möglich, die Selbstklebemasse bzw. Elektrolumineszenzmasse aus der Schmelze auf einen temporären oder permanenten Träger zu beschichten, bevorzugt mittels Walzen- oder Extrusionsverfahren, etwa bei 140 °C mittels eines Beschichtungsextruders. Bei der Auftragung auf einen temporären Träger kann die Klebemasse anschließend mit einem permanenten Träger verbunden werden, etwa in einem Laminierungsschritt. Abschließend kann die so erhaltene Masseschichtung durch Einwirkung von Elektronenbestrahlung vernetzt werden.

Zusätzlich zu der Klebemasseschichtung und dem optionalen Träger kann das Flächenelement darüber hinaus auch weitere funktionelle Schichten enthalten. Somit kann ein erfindungsgemäßes Flächenelement auch ein Laminat aus mehreren Schichten sein, etwa solchen aus Klebestoff, Kunststoff, Keramik, Indiumzinnoxid und/oder Metall, und zusätzlich weitere Funktionsschichten aufweisen.

Weitere Vorteile und Anwendungsmöglichkeiten gehen aus einem exemplarisch ausgewählten Ausführungsbeispiel hervor. Hierfür wurde ein erfindungsgemäßes haftklebriges Polymer auf Cyanoacrylatbasis hergestellt, das eine relative Permittivität von mehr als 4,5 aufweist, und zwei weitere haftklebrige Polymere als Vergleichsbeispiele hergestellt, nämlich ein Polymer auf Cyanoacrylatbasis und ein Vergleichspolymer ohne Cyanoacrylate.

Die Messung der relativen Permittivität erfolgte bei einer Temperatur von 23 °C in einem Plattenkondensator mit variablem Messspalt, dessen Elektrodenplatten einen Durchmesser von 60 mm aufweisen. Zur Messung wurde eine Probe homogener Dicke als Dielektrikum in den Messspalt eingebracht und mit den beiden Elektrodenplatten vollflächig und zwischenraumfrei in Kontakt gebracht. Der sich hierbei ergebende Abstand der Elektrodenplatten (der im Idealfall mit der Stärke der zu prüfenden Probe identisch sein sollte) wird mittels eines Messschiebers bestimmt. Zusätzlich wurde eine Blindmessung bei identischem Abstand der Elektrodenplatten durchgeführt, wofür das zu prüfende Material entfernt wurde, so dass bei der Blindmessung Luft als Dielektrikum bekannter Permittivität eingesetzt wurde. Für die Messung wie für die Blindmessung wurde die Kapazität des Messaufbaus für eine Messfrequenz von 1 kHz mit einem LCR-Messgerät (Typ: GWInstec LCR 821) ermittelt. Die relative Permittivität des Probenmaterials wurde bei einem Vergleich der beiden ermittelten Kapazitäten bestimmt; die Berechnung erfolgte nach herkömmlichen Bestimmungsmethoden wie sie beispielsweise in der Norm ASTM D150 festgelegt sind.

Zur Herstellung eines erfindungsgemäßen haftklebrigen Polymers auf Cyanoacrylatbasis, das eine relative Permittivität von mehr als 4,5 aufweist, wurden in einem Glasreaktor mit einem Fassungsvolumen von 2 L 300 g einer Mischung von 3 Gew.-% Acrylsäure, 50 Gew.-% 2-Cyanoacrylat und 47 Gew.-% 2-Ethylhexylacrylat in 300 g eines Lösemittelgemischs aus Aceton und Isopropanol im Verhältnis 90:10 vorgelegt. Nach Entgasen der Reaktionslösung bei fünfundvierzigminütigem Hindurchleiten von Stickstoff unter Rühren wurde diese auf eine Temperatur von 58 °C erhitzt und 0,2 g 2,2'Azobis(2-methylbutyronitril) (Vazo 67™ der Firma DuPont) als Radikalstarter (Initiator) hinzugegeben. Nach der Zugabe wurde die Reaktionslösung auf eine Temperatur von 75 °C erhitzt und die Polymerisationsreaktion bei dieser Temperatur durchgeführt. Eine Stunde nach Beginn der Reaktion wurden der Reaktionsmischung weitere 0,2 g 2,2'Azobis(2-methylbutyronitril) hinzugefügt. Vier Stunden nach Beginn der Reaktion wurde die Reaktionsmischung mit 100 g des Lösemittelgemischs verdünnt. Weitere 100 g des Lösemittelgemischs wurden nach weiteren vier Stunden hinzugefügt (also acht Stunden nach Beginn der Reaktion). Zur Reduktion des restlichen in der Reaktionsmischung verbliebenen Radikalstarters wurden der Reaktionsmischung acht und zehn Stunden nach Beginn der Reaktion jeweils 0,6 g Bis-(4-tert.-butylcyclohexanyl)-peroxy-dicarbonat (Perkadox 16™ der Firma Akzo Nobel) hinzugegeben. Vierundzwanzig Stunden nach Beginn der Reaktion wurde die Polymerisationsreaktion durch Abkühlen der Reaktionsmischung auf Raumtemperatur (23 °C) beendet. Um aus dem so erhaltenen Polymer eine Klebemasse zu erzeugen, wurde das Reaktionsprodukt mit einer 3 %-igen Lösung von Aluminium(III)-acetylacetonat in Aceton (0,3 Gew.-%, bezogen auf die Masse des Polymers) abgemischt. Das so erhaltene Polymer wies eine relative Permittivität von 6,1 auf.

Die Herstellung eines haftklebrigen Polymers auf Cyanoacrylatbasis, das eine relative Permittivität von weniger als 4,5 aufweist, erfolgte ebenfalls nach diesem Verfahren. Als vorgelegte Mischung wurden hier 300 g einer Mischung von 3 Gew.-% Acrylsäure, und 87 Gew.-% 2-Ethylhexylacrylat eingesetzt, das Lösemittel bestand aus 200 g eines Lösemittelgemischs aus Aceton, Siedegrenzbenzin 60.95 und Isopropanol im Verhältnis 47:50:3. Das so erhaltene Polymer wies eine relative Permittivität von 4,0 auf.

Die Herstellung eines haftklebrigen Vergleichspolymers ohne Cyanoacrylate erfolgte ebenfalls nach diesem Verfahren. Als vorgelegte Mischung wurden hier 400 g einer Mischung von 5 Gew.-% Acrylsäure, 20 Gew.-% Methylacrylat und 75 Gew.-% 2-Ethylhexylacrylat eingesetzt, und das Lösemittel bestand aus 266 g eines Lösemittelgemischs aus Aceton, Siedegrenzbenzin 60.95 und Isopropanol im Verhältnis 47:50:3. Das so erhaltene Polymer wies eine relative Permittivität von 3,0 auf.

Die drei Polymere wurden jeweils in Lösung mit einem partikulären Leuchtmittel (Osram Glacier GLO43HighBrite) versetzt, wobei das Leuchtmittel jeweils im Masseverhältnis von 1:1 eingesetzt wurde, bezogen auf die Masse des gelösten Polymers. Die auf diese Weise erhaltenen gelösten Elektrolumineszenzmassen wurden jeweils mit einem Streichbalken auf je einen Träger als untere Elektrode aufgetragen. Als Träger wurde eine Polyesterfolie von 200 μm Stärke eingesetzt, die einseitig mit einer elektrisch leitfähigen dünnen Aluminiumschicht bedeckt war. Die Polymere wurden aus der Lösung auf die elektrisch leitfähige dünne Silberschicht des Trägers aufgebracht und im Trockenschrank bei 120 °C getrocknet. Nach dem Trocknen wiesen alle drei Schichten dieselbe Schichtdicke von 50 μm auf.

Abschließend wurde auf die freiliegende Seite der Selbstklebemasse eine transparente Polyesterfolie als transparente Elektrode auflaminiert, die an der Seite, die im Verbund die Selbstklebemasse berührt, eine elektrisch leitfähige Indiumzinnoxidschicht aufwies. Das Zusammenfügen der unteren Elektrode und der transparenten Elektrode erfolgte derart, dass jede Elektrode an einer Seite über den Verbund hinausragte. An die überstehenden Abschnitte der Elektroden wurden mittels Klemmverbindern elektrische Anschlussleitungen befestigt, die an eine Strom/Spannungsquelle angeschlossen waren.

An die beiden Elektroden jeder Elektrolumineszenzvorrichtung wurde eine Wechselspannung von 100 V (400 Hz) angelegt und die Intensität der Elektrolumineszenz qualitativ begutachtet. Die bei der Elektrolumineszenzvorrichtung mit dem haftklebrigen Vergleichspolymer ohne Cyanoacrylate beobachtete Elektrolumineszenz und die bei der Elektrolumineszenzvorrichtung mit dem nichterfindungsgemäßen haftklebrigen Polymer auf Cyanoacrylatbasis beobachtete Elektrolumineszenz besaßen hierbei in etwa die gleiche Intensität. Im Gegensatz dazu wies die Elektrolumineszenzvorrichtung mit dem erfindungsgemäßen haftklebrigen Polymer eine erheblich höhere Intensität auf. Darüber hinaus wurde bei der erfindungsgemäßen Elektrolumineszenzvorrichtung in einer Langzeitmessung eine signifikant geringere zeitliche Abnahme der Elektrolumineszenzintensität festgestellt als dies bei den anderen beiden Vorrichtungen der Fall war.

Die qualitativen Experimente zeigen, dass das erfindungsgemäße haftklebrige Polymer hervorragend für die Herstellung von Elektrolumineszenzvorrichtungen geeignet ist.

## Patentansprüche

1. Selbstklebriges Polymer mit einer relativen Permittivität von mehr als 4,5.

2. Selbstklebriges Polymer nach Anspruch 1 **dadurch gekennzeichnet, dass** das Polymer ein Polymer aus einer Monomermischung ist, die einen Massenanteil von mindestens 45 Gew.-% an (Meth)Acrylsäurederivaten umfasst, die jeweils zumindest eine funktionelle Gruppe aus der Menge umfassend Cyanogruppen und Nitrogruppen aufweisen.

3. Selbstklebriges Polymer nach Anspruch 2, **dadurch gekennzeichnet, dass** die zumindest eine Cyanogruppe und/oder Nitrogruppe aufweisenden (Meth)Acrylsäurederivate im Polymer zu einem Massenanteil von maximal 90 Gew.-% vorliegen, vorzugsweise zu einem Massenanteil zwischen 50 Gew.-% und 60 Gew.-%.

4. Selbstklebriges Polymer nach Anspruch 2 oder 3 **dadurch gekennzeichnet, dass** die zumindest eine Cyanogruppe aufweisenden (Meth)Acrylsäurederivate gewählt werden aus der Gruppe umfassend Cyanomethylacrylat, Cyanoethylacrylat, Cyanomethylmethacrylat, Cyanoethylmethacrylat sowie (Meth)Acrylsäurederivate mit O-(per)cyanoethylierten Sacchariden.

5. Selbstklebriges Polymer nach einem der Ansprüche 2 bis 4, **dadurch gekennzeichnet, dass** dieses ein Polymer aus einer Monomermischung ist, die ferner substituierte und/oder unsubstituierte (Meth)Acrylsäureester der allgemeinen Formel $CH_2=CR^1-COOR^2$ umfasst, wobei $R^1$ ausgewählt wird aus der Gruppe umfassend H und $CH_3$ und $R^2$ ausgewählt wird aus der Gruppe umfassend substituierte und unsubstituierte Alkylketten mit 1 bis 20 Kohlenstoffatomen.

6. Selbstklebriges Polymer nach Anspruch 5, **dadurch gekennzeichnet, dass** dieses ein Polymer aus einer Monomermischung ist, die ferner olefinisch ungesättigte Monomere mit funktionellen Gruppen aufweist.

7. Selbstklebemasse mit einer relativen Permittivität von mehr als 4,5.

8. Selbstklebemasse nach Anspruch 7, umfassend ein selbstklebriges Polymer nach einem der Ansprüche 1 bis 6.

9. Selbstklebemasse nach einem der Ansprüche 7 oder 8, **dadurch gekennzeichnet. dass** die Selbstklebemasse eine relative Permittivität von weniger als 25 aufweist.

10. Verwerdung einer Selbstklebemasse nach einem der Ansprüche 7 bis 9 zur Verklebung von Komponenten eines elektronischen Geräts.

11. Selbstklebriges Flächenelement mit einer Selbstklebemasse nach einem der Ansprüche 7 bis 9.

## Claims

1. Self-adhesive polymer having a relative permittivity of more than 4.5.

2. Self-adhesive polymer according to Claim 1, **characterized in that** the polymer is a polymer formed from a monomer mixture which comprises a mass fraction of at least 45% by weight of (meth)acrylic acid derivatives each having at least one functional group from the group consisting of cyano groups and nitro groups.

3. Self-adhesive polymer according to Claim 2, **characterized in that** the (meth)acrylic acid derivatives having at least one cyano group and/or nitro group are present in the polymer in a mass fraction of not more than 90% by weight, preferably in a mass fraction of between 50% and 60% by weight.

4. Self-adhesive polymer according to Claim 2 or 3, **characterized in that** the (meth)acrylic acid derivatives having at least one cyano group are selected from the group consisting of cyanomethyl acrylate, cyanoethyl acrylate, cyanomethyl methacrylate, cyanoethyl methacrylate, and (meth)acrylic acid derivatives with O-(per) cyanoethylated saccharides.

5. Self-adhesive polymer according to any of Claims 2 to 4, **characterized in that** it is a polymer formed from a monomer mixture which further comprises substituted and/or unsubstituted (meth)acrylic esters of the general formula $CH_2=CR^1$-$COOR^2$, where $R^1$ is selected from the group consisting of H and $CH_3$, and $R^2$ is selected from the group consisting of substituted and unsubstituted alkyl chains having 1 to 20 carbon atoms.

6. Self-adhesive polymer according to Claim 5, **characterized in that** it is a polymer formed from a monomer mixture which further has olefinically unsaturated monomers with functional groups.

7. Self-adhesive having a relative permittivity of more than 4.5.

8. Self-adhesive according to Claim 7, comprising a self-adhesive polymer according to any of Claims 1 to 6.

9. Self-adhesive according to either of Claims 7 and 8, **characterized in that** the self-adhesive has a relative permittivity of less than 25.

10. Use of a self-adhesive according to any of Claims 7 to 9 for the bonding of components of an electronic device.

11. Self-adhesive sheetlike element with a self-adhesive according to any of Claims 7 to 9.

**Revendications**

1. Polymère autoadhésif ayant une permittivité relative de plus de 4,5.

2. Polymère autoadhésif selon la revendication 1, **caractérisé en ce que** le polymère autoadhésif est un polymère à base d'un mélange de monomères qui comprend une proportion en masse d'au moins 45 % en poids de dérivés d'acide (méth)acrylique, qui comportent chacun au moins un groupe fonctionnel choisi dans l'ensemble comprenant des groupes cyano et des groupes nitro.

3. Polymère autoadhésif selon la revendication 2, **caractérisé en ce que** les dérivés d'acide (méth)acrylique comportant au moins un groupe cyano et/ou un groupe nitro sont présents dans le polymère en une proportion en masse d'au maximum 90 % en poids, de préférence en une proportion en masse comprise entre 50 % en poids et 60 % en poids.

4. Polymère autoadhésif selon la revendication 2 ou 3, **caractérisé en ce que** les dérivés d'acide (méth)acrylique comportant au moins un groupe cyano sont choisis dans l'ensemble comprenant l'acrylate de cyanométhyle, l'acrylate de cyanoéthyle, le méthacrylate de cyanométhyle, le méthacrylate de cyanoéthyle ainsi que des dérivés d'acide (méth)acrylique avec des saccharides O-(per)cyano-éthylés.

5. Polymère autoadhésif selon l'une quelconque des revendications 2 à 4, **caractérisé en ce que** ledit polymère autoadhésif est un polymère à base d'un mélange de monomères qui comprend en outre des esters d'acide (méth) acrylique substitués et/ou non substitués, de formule générale $CH_2=CR^1$-$COOR^2$, $R^1$ étant choisi dans le groupe comprenant H et $CH_3$ et $R^2$ étant choisi dans le groupe comprenant des chaînes alkyle substituées et non substituées ayant de 1 à 20 atomes de carbone.

6. Polymère autoadhésif selon la revendication 5, **caractérisé en ce que** ledit polymère autoadhésif est un polymère à base d'un mélange de monomères qui comporte en outre des monomères à insaturation oléfinique, comportant des groupes fonctionnels.

7. Matière autoadhésive présentant une permittivité relative de plus de 4,5.

8. Matière autoadhésive selon la revendication 7, comprenant un polymère autoadhésif selon l'une quelconque des revendications 1 à 6.

9. Matière autoadhésive selon l'une quelconque des revendications 7 ou 8, **caractérisé en ce que** la matière autoadhésive présente une permittivité relative de moins de 25.

10. Utilisation d'une matière autoadhésive selon l'une quelconque des revendications 7 à 9, pour le collage de composants d'un dispositif électronique.

11. Élément plat autoadhésif comportant une matière autoadhésive selon l'une quelconque des revendications 7 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006013834 A1
- DE 102006013834
- DE A1

**In der Beschreibung aufgeführte Nicht-Patentliteratur**

- **T.G. FOX.** *Bull. Am. Phys. Soc.,* 1956, vol. 1, 123
- **SKELHORNE.** Electron Beam Processing, in Chemistry and Technology of UV and EB Formulation for Coatings, Inks and Paints. SITA, 1991, vol. 1